# EUROPEAN PATENT APPLICATION

(11) **EP 4 685 834 A1**
(43) Date of publication of application: **28.01.2026**
(21) Application number: 24190090.1
(22) Date of filing: 22.07.2024
(51) Int. Cl.: H01H 9/06, H01H 13/08

(54) **SWITCHING DEVICE FOR A HANDLE**

(71) Applicant: Rochford, Alan, Skerries K34 X438 County Dublin (IE)
(72) Inventor: Rochford, Alan, Skerries K34 X438 County Dublin (IE)
(74) Representative: Schütte, Gearoid

(57) **Abstract**

A cylindrical switching device (102) for a welding torch (100) is held in use in an operator's hand (104) with a full-palmar prehension grasp type. A torch handle (101) with the integrated cylindrical switching device (102) can be mounted to a generic torch body (106) to form the welding torch (100) assembly. The integrated cylindrical switching device (102) enables a full-palmar prehension grasp by the operator's hand (104) to be maintained from arc striking through welding and to arc termination. The cylindrical switch (102) is normally open when held in a relaxed grasp, and the cylindrical switch (102) is closed when the outer surface is resiliently deformed upon application of an intentional elevated grasping force by the hand (104), the resultant electrical signal being used by the welding power source to strike or terminate the welding arc.

## Description

### Introduction

This invention relates to an electrical circuit switching device integrated into a handle to be held by humans, and in particular its application to a control device for a welding torch.

General welding device component definitions are used as per IEC/EN 60974-7:
**Torch:** device that conveys all services necessary to the arc for welding, cutting or allied processes (for example, current, gas, coolant, electrode, wire).
**Torch body:** main component to which the cable hose assembly and other components are connected.
**Handle:** part designed to be held in the operator's hand.

### Background to the Invention

The present invention is primarily directed to the manual welding of metals; and more specifically the Tungsten Inert Gas (TIG) welding process, also known as GTAW (Gas Tungsten Arc Welding) or WIG (Wolfram Inert Gas). It is envisaged that there are simple adaptions of the invention to extend its application to other manual welding processes such as plasma, laser, MIG etc.

In industrial pipe welding the operator must complete several circumferential passes around the weld seam to join two pipe sections. Often in the field and in-situ, the operator cannot reposition the workpiece. How the operator grasps and controls their welding torch assembly is essential for balancing ergonomics, quality and productivity. A typical TIG welding torch assembly weighs 200-600 grammes (0.5-1.3 lbs). Therefore, a modest supporting force and stable grasp position is required to support the device for any extended time, particularly in field conditions where the operator may have to work in narrow confines, lying on their back or working above their head.

A common pipe welding technique is known as "walking the cup", where the operator rests the forward edge of the torch cup on the seam and oscillates the entire torch about the weld seam while also translating along the seam. This provides a highly consistent weld at all positions, ensuring repeatable penetration and high-quality. The instinctive preference for most welders using this technique is to hold the torch handle with full-palmar prehension, this provides a stable connection between torch and motion of the arm that achieves the oscillations/translation and is an efficient grasp that does not fatigue quickly. Full-palmar prehension (Kapandji, The Physiology of the Joints, Churchill Livingstone, 1982), also known as a "cylindrical grip", "power grip-with thumb abducted", "hammer grip", "medium wrap", is a static hand posture (i.e. a grasp) ideal for holding cylindrical objects of diameters ranging between 2-5 cm and over a wide range of weights, with good stability. Indeed, this grasp type has been hypothesised as being linked with "tool behaviour" and for wielding clubs with greater control and efficiency (Young, Evolution of the human hand: the role of throwing and clubbing, Journal of Anatomy, Wiley, 2003). Generally, a relaxed but stable grasp is preferred during welding operations for the best weld consistency and to minimise operator fatigue. In certain cases of materials and positions it may be preferable for the operator to "free hand" tack welds and/or root passes, where the 4th or 5th fingers are often extended to support the hand against the workpiece.

It is common for welding operators to utilise the "lift-arc" technique to strike the arc, requiring no hand or foot controls. This technique involves contacting the tungsten electrode of the welding torch to the grounded workpiece, the welding power source detects this closed-circuit and initiates the welding current upon lifting the electrode away from the workpiece. This method has the inherent disadvantage of mutual contamination risk of the tungsten electrode and workpiece. The operator must also execute a "tail off" when approaching the end of the weld to solidify the weld pool and then to break the arc by abruptly lifting the torch away from the workpiece to terminate the arc. This requires considerable skill and experience to repeatably do correctly, particularly if tack welding. The tail-off also has the inherent disadvantage of exposing the hot (and possibly still molten metal) to the ambient air (as the shield gas coverage is interrupted when the torch is lifted) causing local oxidation in the weld and in the worst case the abrupt solidification can result in a porous and brittle region at the weld stop. Operators often must spend additional labour time to grind away the weld start and stop areas to remove these imperfections. Lift-arc is also not suitable for welding some materials such as aluminium alloys.

In tightly controlled welding operations, such as pressure vessels and process piping, it may be required to use a non-contact arc striking method by the welding procedure specification. "Remote-switched" contemporary welding power sources utilise a "high-frequency start" circuit for arc striking. Foot pedals are a well-known device for controlling the arc striking/termination and welding current. Foot pedals are a good solution at a fixed workbench; but have clear drawbacks of handling extra devices and cables in the field or in any scenario that the operator must reposition their body during a weld, rendering a stationary foot pedal a hinderance. These drawbacks have been noted by many inventors for at least 75 years and lead to the development of a complementary field of hand-control devices that offer greater flexibility for the operator in the field, both as torch handle integrated devices and in the form of retrofit devices.

A common characteristic of the prior art of welding hand-controls, is to require the operator to free a digit (notably the thumb or index finger) to actuate a button switch that controls the striking/termination of the welding arc. However, when the thumb is adducted or the index finger extended, the grasp is destabilised, requiring the operator to tense the digits/muscles that remain in support of the grasp beyond comfortable levels. This in turn leads to premature fatigue of the operator's hand and arm, increasing the risk of the welding torch slipping and inadvertently contacting the electrode to the workpiece and reducing productivity. Often operators opt to transition back to the optimal full-palmar prehension grasp after extending a digit to actuate the button switch. This transition will induce a small movement of the torch that can lead to striking the electrode into the workpiece inadvertently, causing tungsten contamination in the weld pool, in turn reducing productivity due to time spent grinding out contaminations and resharpening of the tungsten electrode.

The limitations of the prior art in welding hand controls can be categorised as A through E:
A. Switch location/type requires operator to reposition hand between switch actuation and welding, i.e. inducing motion in torch risking inadvertently hitting electrode on workpiece and contamination.
B. Switch location/type requires operator to maintain an adducted/extended digit applying a precision pressure to a switch or force-transducer during welding, i.e. accelerating fatigue, destabilising grasp & risking non-compliance with the welding procedure specification current range requirements.
C. Switch type involves improvised fixation to generic handle and does not offer adequate ingress protection for field scenarios, i.e. conductive grinding dust and moisture.
D. Switch type can be inadvertently actuated when laid down or pressed unintentionally.
E. Switch type requires additional control electronics to interface to standard welding power source.

Generic contemporary "integrated torch controls" which include a button switch on the torch handle have Limitations A & D present. These generic devices can offer advantages in terms of having good ingress protection if well designed and are generally low cost. However, due to the use of a generic momentary push button switch, the actuation force of the momentary switch is typically quite low, on the order of 50-200 grammes (0.1-0.4 lbs); potentially leading to inadvertent actuation if the operator opts to rest their controlling digit against the button while manipulating the torch during welding, or if the operator lays the torch down with the button against a surface.

The contemporary inventions of Upton (US 9,550,250) and Vogel (US 10,987,751) disclose inventions with a button style switch that require the adducted thumb or extended index finger to be held during the weld while applying a constant precision force to the point switch or force transducer to sustain a steady welding current. This usually is accomplished with a "writing tripod" grasp type, which can be classified as in the "precision" category of grasps. Precision grasps are well suited to accurate and comfortable control a pen, pencil or paintbrush etc. weighing 5-15 grammes (0.2-0.6 oz) but is not ideal for a typical welding torch assembly that is approximately 40 times more massive than a common pen or pencil, particularly in field conditions where the operator may need to support the torch assembly above their head or in confined spaces. The adducted thumb or extended index finger generally destabilize the grasp of cylindrical objects (Kapandji, The Physiology of the Joints, Churchill Livingstone, 1982). As previously noted, this requires the operator to excessively tense their remaining digits and muscles in support of the grasp leading to earlier fatigue. A further limitation of this grasp type is at certain combinations of the wrist and arm position/angle the muscles engaged in precision grasps weaken and can allow the torch handle to easily slip. With any of these devices, the operator may opt to quickly shift their hand position from an adducted/extended grasp for arc striking/termination to a more optimal abducted thumb grasp during the welding. This will invariably cause a momentary disturbance to the welding torch, and therefore electrode-workpiece gap, risking inadvertent electrode contact with the workpiece and contamination of both. A similar limitation exists for trigger actuated devices such as disclosed by Kleppen (US 6,285,003) and Blide (US 6,956,184), as the index finger is again removed from contributing to grasp stability. In some scenarios operators may also be required to "freehand", i.e. without resting the welding torch cup against the workpiece. In some scenarios the operator may support their hand with either the 4th or 5th finger against the workpiece, removing these from contributing to the support of the torch, thereby the reduced gripping force available makes the extended index finger or adducted thumb positions even more unstable.

Corrigall (US 4,540,871A) has disclosed a circumferential switching device for a welding device that addresses some of the drawbacks mentioned above, albeit with several drawbacks of its own and only in the embodiment of a MIG welding torch. The nature of the spring contacts disclosed allows for significant elastic deformation during the actuation of the switch. This however is not ideal as it will require the operator to displace their digits out of the resting position, inducing similar unwanted motions in the welding torch as previously mentioned. The switch also only covers a fraction of the torch handle's axial length and does not lie flush to the rest of the handle; this causes difficulty in obtaining a stable and comfortable full-palmar prehension style grasp. The switch also has single point contact circuit closer, i.e. limitation D mentioned above, which is dangerous if the torch can be actuated simply by placing down or inadvertently bumping.

During most industrial pipe welding scenarios, variation of the welding current during the process is not required or desired. In certified pipe welding, allowable current range is specified by a welding procedure specification from calculations that ensure weld integrity by balancing adequate penetration into the substrate against overall allowable heat-input. Any device where the welding current is dependent on the operator's digit to apply constant precise pressure (as required by the inventions of Kleppen, Upton & Vogel) thus presents a limitation and not an advantage in many scenarios. However, in certain benchtop fabrication scenarios these inventions may still be of utility.

Due to these drawbacks in the prior art of welding hand controls, it is still widely practiced in industrial pipe-welding to utilise the aforementioned "lift-arc" technique despite its inherent drawbacks, foregoing any hand control switch.

### Summary of the Invention

In its most general form, the invention is a cylindrical/circumferential/annular electrical switch actuated by a human hand for incorporation in or mounting on a handle of a device.

According to the invention there is provided a control device for a welding torch, comprising a cylindrical switch integrated into the torch handle, the cylindrical switch that is normally open when held in a relaxed grasp, and being closed when the outer surface is resiliently deformed upon application of an intentional elevated grasping force by the hand, the resultant electrical signal being used by the welding power source to strike or terminate the welding arc.

In one embodiment of the invention there is provided a switching device for a welding torch, comprising an operating switch for mounting on the welding torch handle to form a grasp sensitive handgrip of the welding torch, the operating switch being resiliently deformable between closed and open positions under an intentional increase and decrease of a grasping force in use to control operation of the welding torch.

In another embodiment the operating switch comprises at least one switch pair comprising two spaced-apart switches connected in series and operable together in response to the grasping force.

In another embodiment the switches in each switch pair locate at opposite sides of the welding torch handle when the switching device is mounted on the welding torch handle.

In another embodiment a plurality of longitudinally spaced-apart switch pairs is provided.

In another embodiment adjacent switch pairs are laterally offset from each other.

In another embodiment the switches are mounted on a resiliently deformable tubular support.

In another embodiment the tubular support is cylindrical.

In another embodiment the operating switch is a cylindrical switch comprising a contact assembly having a cylindrical layer of substrate insulator with conductors arranged in a circuit and a complementary cylindrical layer of superstrate insulator with conductors arranged in an array, separated by a cylindrical layer of spacer insulator with through-hole cutouts in the spacer insulator, the contact assembly being mounted between an inner cylindrical core and an outer flexible cylindrical handgrip.

In another embodiment the substrate insulator and conductors are mounted on an inner face of the spacer insulator and the superstrate insulator is mounted on an outer face of the spacer insulator.

In another embodiment the superstrate insulator has a plurality of spaced-apart conducting contacts which project radially inwardly on an inner face of the superstrate insulator, and the substrate insulator has a plurality of spaced-apart conducting contacts projecting radially outwardly from an outer face of the substrate insulator to form a circuit, an array of through-holes cutouts in the spacer insulator to allow engagement between associated contacts on the superstrate insulator and on the substrate insulator when resiliently deformed together to close the cylindrical switch.

In another embodiment the substrate insulator or superstrate insulator has axially spaced-apart parallel circumferential conductor paths.

In another embodiment the substrate insulator or superstrate insulator has conductor paths forming an array of series-pair switch contacts in parallel.

In another embodiment the insulators each comprise a resilient polymer.

In another embodiment the resilient polymer comprises polyester or polyimide.

In another aspect the invention provides a welding torch incorporating the switching device.

In another aspect there is provided a switching device for a handle, comprising an operating switch for mounting on the handle to form a grasp sensitive handgrip, the operating switch being resiliently deformable between closed and open positions under an intentional increase and decrease of a grasping force applied to the handgrip in use.

### Brief Description of the Drawings

The invention will be more clearly understood by the following description of some embodiments thereof, given by way of example only, with reference to the accompanying drawings, in which:
Fig. 1 is an isometric view of a switching device for a welding torch according to the invention, shown mounted on a generic welding torch handle, held in the hand of an operator;
Fig. 2 is a rear elevational view of the switching device;
Fig. 3 is a sectional side elevational view taken along the line III-III of Fig. 2;
Fig. 4 is an isometric view of the switching device with the outermost layer of the handle removed, showing an exemplary layout array of the active regions of the switch contacts;
Fig 5. is an electrical schematic illustration of the array of series-pair switch contacts of the switching device arranged in parallel;
Fig. 6 is an enlarged detail sectional view taken along the line VI-VI of Fig. 2, with the relative scales of components modified for clarity, the switching device being shown in an open circuit state;
Fig. 7 is an equivalent electrical schematic of a series-pair of switch contacts corresponding to the actuation state of Fig. 6;
Fig. 8 is an enlarged detail sectional view taken along the line VI-VI of Fig. 2, with the relative scales of components modified for clarity, the switching device being shown in another open circuit state;
Fig. 9 is an equivalent electrical schematic of a series-pair of switch contacts corresponding to Fig. 8;
Fig. 10 is an enlarged detail sectional view taken along the line VI-VI of Fig. 2, with the relative scales of components modified for clarity, the switching device being shown in the closed circuit state; and
Fig. 11 is an equivalent electrical schematic corresponding to Fig. 10.

### Detailed Description of Preferred Embodiments

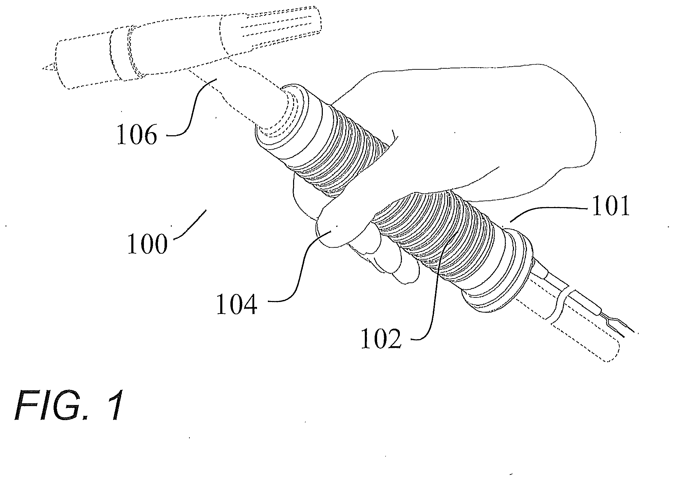

Referring to the drawings, there is illustrated a switching device according to the invention for a welding torch 100, comprising a torch handle 101 with an integrated cylindrical switching device according to the invention, indicated generally by the reference numeral 102, shown in Fig. 1 held in an operator's hand 104 with a full-palmar prehension grasp type. The torch handle 101 with the integrated cylindrical switching device 102 can be mounted to a generic torch body 106 to form the welding torch assembly. The integrated cylindrical switching device 102 enables a full-palmar prehension grasp by the operator's hand 104 to be maintained from arc striking through welding and to arc termination. Along with the illustrated two body example, a torch body with an integrated handle forming a single body, utilising the same intent of the described invention for an integrated switch within the handle portion of the single body, is also envisaged.

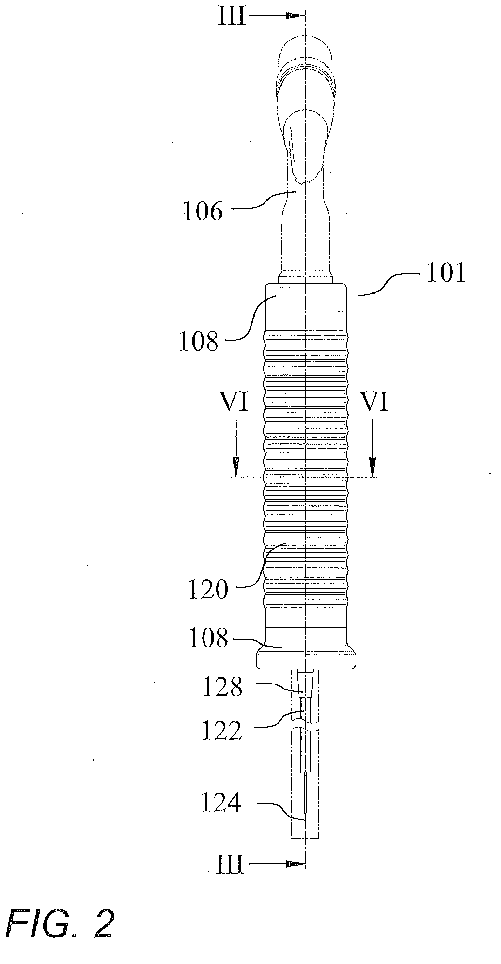

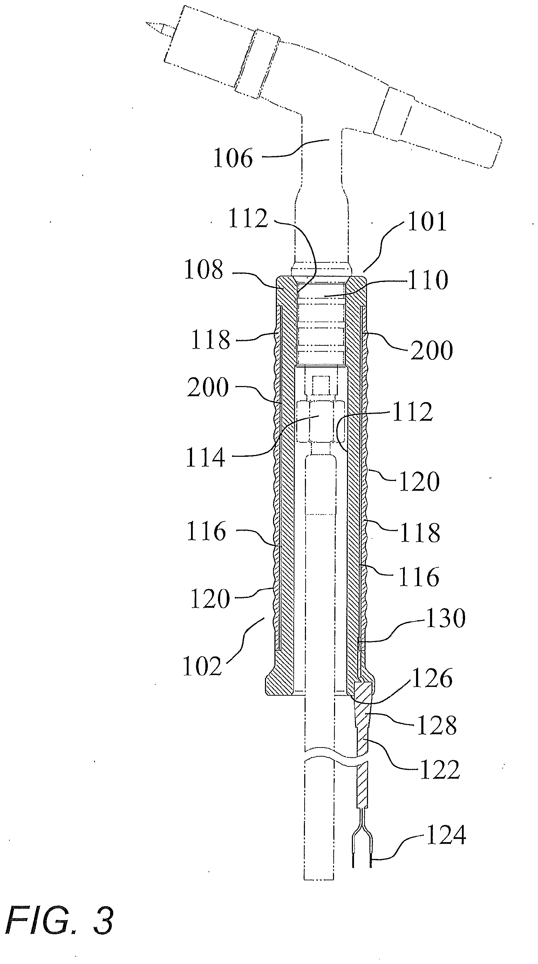

Referring in particular to Fig. 2 and Fig. 3, the torch handle 101 has a rigid cylindrical inner handle core 108. An outer cylindrical surface 110 of the torch body 106 is engageable within a coaxial inner bore 112 of the core 108 to mount the torch body 106 on the torch handle 101 with the integrated cylindrical switch 102. The coaxial inner bore 112 of the handle core 108 is profiled to allow clearance for the cable-hose assembly 114 and its connection to the torch body 106. A contact assembly 200 is conformally mounted to the handle core 108, in the illustrated example being mounted within a circumferential recess 116 of the core 108. A flexible grip 118 is mounted about the contact assembly 200, thereby sealing the contact assembly 200 between the inner core 108 and the flexible grip 118. An outer surface 120 of the flexible grip 118 is textured to maximise stability when held in an operator's hand. This may be achieved through patterned ribs as shown in the illustrations or by a knurled texture or by increased surface roughness.

The torch handle core 108 is manufactured from a resilient high-modulus polymer, such as polyamide, of sufficient dielectric strength to insulate the operator from welding electrical current passed through the cable-hose assembly 114 and into the torch body 106. The coaxial inner bore 112 of the core 108 is envisaged with several sizes and shapes to fit the many types and sizes of generic torch body 106 generally available.

The flexible grip 118 is manufactured from a resilient low-modulus elastomeric polymer, such as silicone rubber or polyurethane. The flexible grip 118 further insulates the operator from electrically energised conductors of the welding current and of the control circuit, in addition to providing a comfortable and ergonomic outer surface 120 for the operator to grasp. The surface sensitive to switching comprises the entire outer surface 120 of the flexible grip 118 along the majority of the axial length of the torch handle 101.

Referring in particular to Fig. 3, a control cable 122 within which there are two or more conductors 124, one conductor 124 providing the control voltage of the welding machine (typically 12-24 VDC) and the other conductor 124 providing a path for the signal return to the welding power source. The control cable 122 is sealed into the torch handle core 108 with a suitable adhesive for ingress protection, at a bottom face 126, and provided with a strain-relief feature 128 for handling protection. It is also envisaged that a connector receptacle may be provisioned at the bottom face 126 of the inner core 108. The control cable 122 has an internal connection 130 to the contact assembly 200 that is potted or overmoulded for ingress protection. The conductors 124 of the control cable 122 are envisaged to be terminated in a connector suitable to interface to the welding power supply.

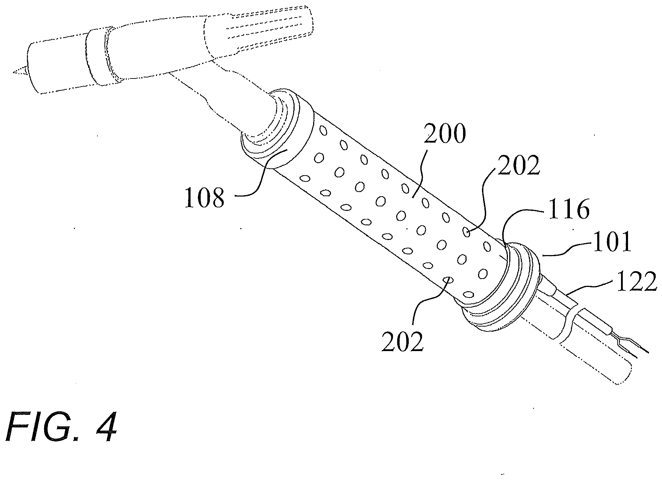

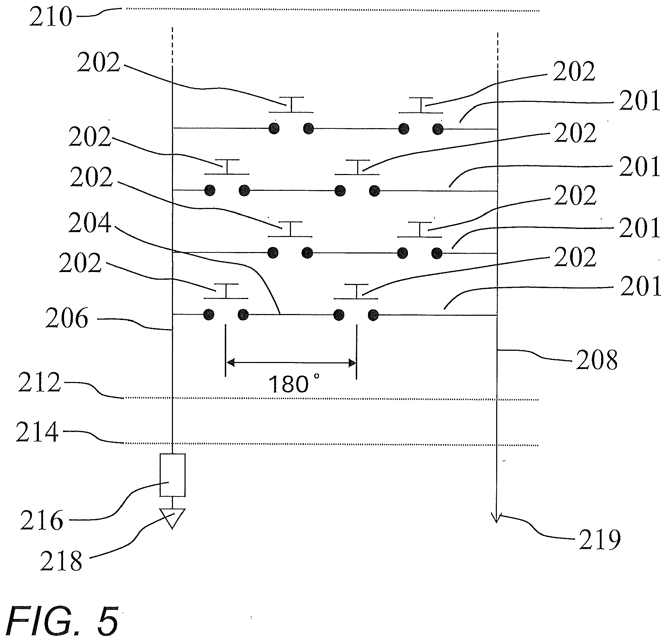

Referring in particular to Fig. 4 and Fig. 5, the contact assembly 200 is shown conformally mounted within the circumferential recess 116 of the core 108. The contact assembly 200 has a plurality of normally open switches 202, spaced axially and circumferentially. The switches 202 are arranged in pairs 201 of corresponding switches 202, comprising two spaced-apart switches 202 positioned at a diametrically opposite points on the torch handle 101, i.e. 180 degrees rotation about the main axis of the torch handle 101. Each pair of switches 202 are connected electrically in series by a conductor 204 extending therebetween as shown in Fig 5. A plurality of spaced-apart "series-pairs" 201 of switches 202 extend along a longitudinal axis of the torch handle 101 and are connected in parallel by conductors 206 and 208.

Fig. 5 illustrates an electrical schematic of the entire device, the region bounded by the lines 210 and 212 representing the conductors and components within the torch handle 101, i.e. within the contact assembly 200. The region bounded by lines 212 and 214 representing the conductors 124 within the control cable 122. Line 214 represents the interface to the welding power supply. Within the welding power supply an example circuit is shown comprising a load 216, e.g. a pull-down resistor, electrical ground connection 218 and a voltage supply connection 219 to power the control circuit.

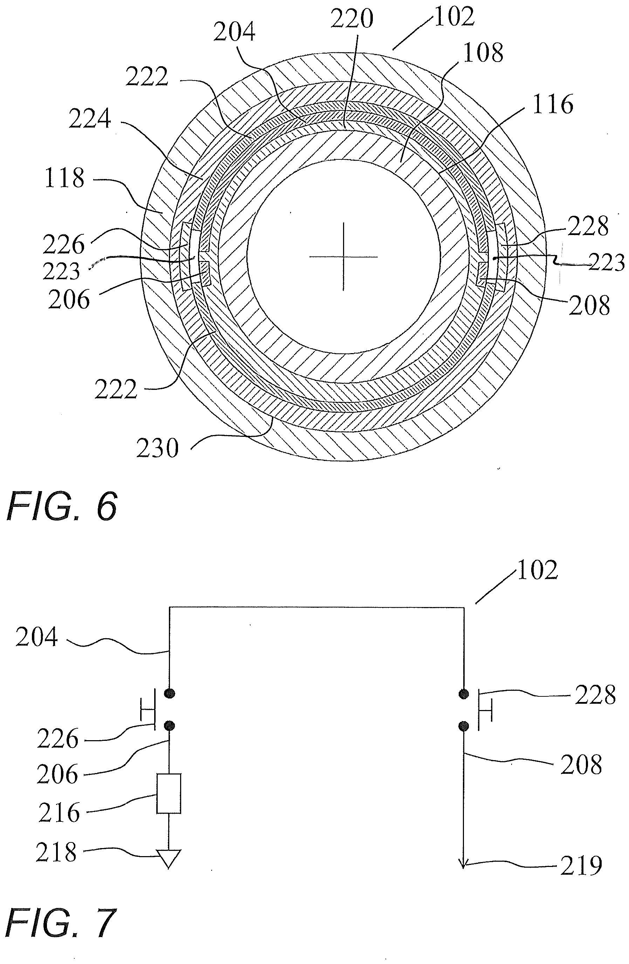

Referring in particular to Fig 6, Fig 8 and Fig 10, the switching device 102 is shown through section VI-VI of Fig. 2. The relative sizes of each element of the switching device 102 of the invention shown have been modified for clarity to show the construction of the contact assembly 200. The contact assembly 200 is shown conformally mounted to a cylindrical inner core 108 about recessed surface 116.

The contact assembly 200 is comprised of several layers. The substrate insulator 220 is mounted about the inner core 108, extending radially outward from the recessed surface 116. Within the substrate insulator 220 is mounted the conductors 206, 204 and 208 comprising the circuit elements illustrated in Fig. 5. A spacer insulator 222 mounts about the substrate insulator 220. The spacer insulator 222 is illustrated as having pairs of diametrically opposed through-hole cutouts 223, these being shaped and located to correspond to the pairs 201 of switches 202 spaced axially and circumferentially along the contact assembly 200. A superstrate insulator 224 is mounted about the spacer insulator 222. Within the superstrate insulator 224 is mounted conductors 226 and 228. These conductors 226,228 compromise contact pads matching the size of the cutouts 223 of the spacer insulator 222. The flexible grip 118 is mounted to the superstrate insulator 224 about its outer surface 230.

The cutouts 223 of the spacer insulator 222 allow the conductors 204, 206, 208 to project exposed conductor in the radially outward direction. Similarly, the conductors 226, 228 project exposed conductor in the radially inward direction. It will be appreciated that the positions of the conductors 206, 204 and 208 could be reversed with 226 and 228 on the spacer insulator 222, without altering the function of the device. In this case, the conductors 226 and 228 are mounted within the superstrate insulator 224 and the conductors 206, 204 and 208 are mounted within the substrate insulator 220.

Provision for air volume venting in the spacer insulator 222, as per well-known membrane switch design techniques is not illustrated but envisaged. It is envisaged to include electromagnetic interference shielding in a layer of the contact assembly 200, but as this does not contribute to the intent of the invention it is omitted from the illustrations. All the layers of the contact assembly 200 are mounted together with a suitable adhesive to seal from dust and moisture ingress.

Fig 6 illustrates the switching device 102 in an inactive state, no application of force on the flexible grip 118 results in the conductors 206, 204 and 208 being open circuit, the series-pair electrical path is open circuit as illustrated in Fig. 7.

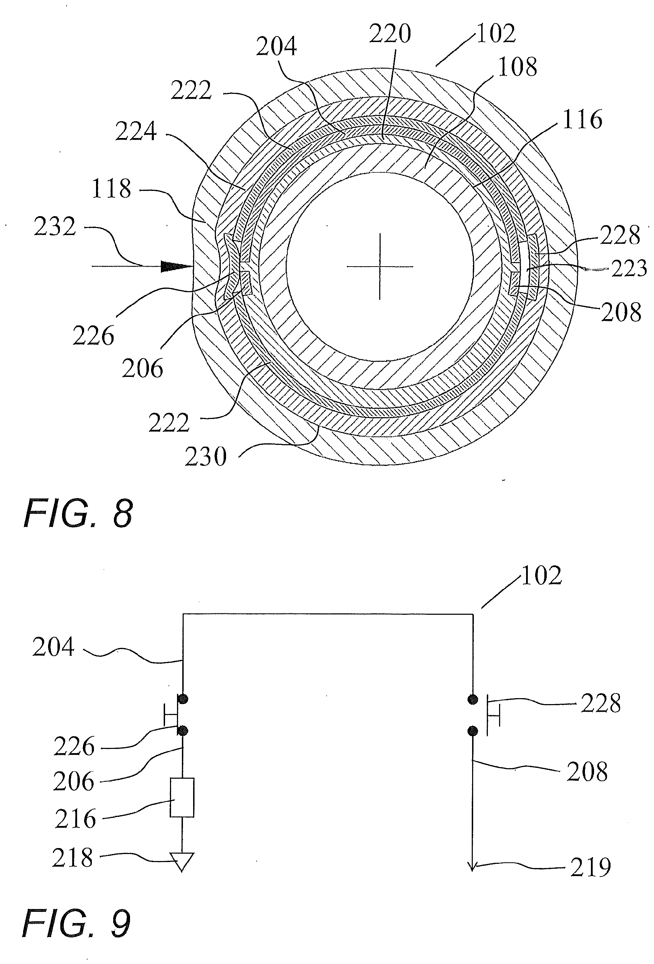

Fig 8 illustrates the switching device 102 in a partially active state, a single sided force 232 is applied, such as when the device is laid down. The conductors 206, 204 are brought into contact with conductor 226, the conductors 208, 204 remain open as conductor 228 is not brought into contact. Then the series-pair electrical path is open circuit as illustrated in Fig. 9.

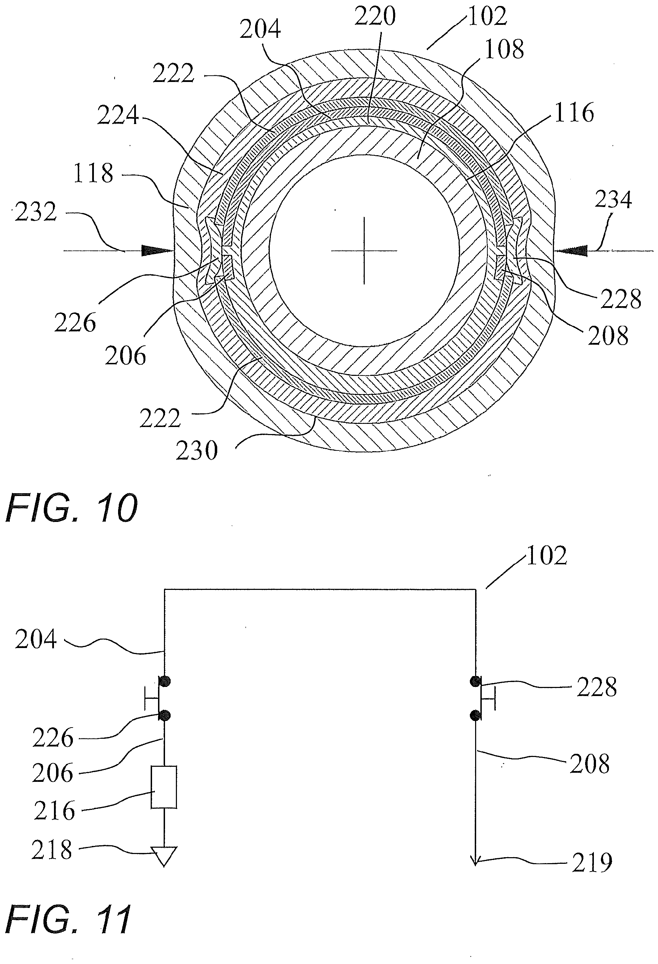

Fig 10 illustrates the switching device 102 in an active state, a compressive force pair 232, 234 are applied, such as a grasping force that applies at opposite sides of the flexible grip 118 such as full-palmar prehension. The conductors 206, 204 are brought into contact with conductor 226. The conductors 208, 204 are brought into contact with conductor 228. Thus the series-pair electrical path is closed circuit as illustrated in Fig. 11. The resulting electrical signal can be read by the welding power source controller to strike/terminate the welding arc accordingly. Upon removal of the force pair 232, 234 the resilient layers return to their original position illustrated in Fig. 6 thereby breaking the contacts and functioning as a normally open switch.

The method of construction of the contact assembly 200 is envisaged in the manner of the well-known normally open membrane switch. Both tactile and non-tactile types are envisaged. The contact assembly 200 is comprised of polymer laminae with circuit paths and contacts contained within each layer. The operator holds the device on a flexible grip 118 by the outer surface 120 which is manufactured from a suitable low-modulus textured elastomeric polymer such as polyurethane or silicone rubber.

Radially inward of the flexible grip 118 is the superstrate insulator 224 manufactured from a resilient polymer such as polyester or polyimide with a plurality of diametrically opposing conductors 226, 228 projecting radially inwardly spaced axially along the contact assembly 200. The conductors 226, 228 are envisaged to be manufactured by well-known flexible printed circuit board construction techniques such as etching of copper clad insulators or by well-known membrane switch construction techniques such as conductive ink printing techniques directly onto the insulator.

Radially inward of the superstrate insulator 224 is the spacer insulator 222 manufactured from a resilient polymer such as polyester or polyimide with a suitable adhesive on both sides to seal and protect the contacts from dust and moisture ingress. The resilient property of the spacer insulator 222 reopens the circuit when the actuation force is removed.

Radially inward of the spacer insulator 222 is the substrate insulator 220 manufactured from a resilient polymer such as polyester or polyimide with a plurality of conductors 206, 204 and 208 projecting radially outward. The conductors 206, 204 and 208 are envisaged to be manufactured by well-known flexible printed circuit board construction techniques such as etching of copper clad insulators or by well-known membrane switch construction techniques such as conductive ink printing techniques directly onto the insulator or by integration directly into the polymer of the torch handle core 118 using the well-known three-dimensional moulded interconnect device technique.

Many array configurations of the conductors 206, 204 and 208 are possible that achieve the same intent of this invention, whereby conductor 204 carries the electrical signal around the circumference of the handle and conductors 206 and 208 are positioned to be made closed-circuit with conductor 204 when both conductors 226 and 228 are brought into contact through the cutouts in the spacer insulator 222.

It is envisaged that the various layers of the contact assembly 200 could be manufactured as individual laminae and assembled one-by-one or as one manufactured as a single piece that is wrapped or folded onto itself to create the functional layers.

The switching device 102 of the invention may include contacts separated by piezoresistive materials to provide an analogue signal to transduce grip force.

It is envisaged that a potentiometer located on the device but away from the active switching handgrip surface 120 would allow remote adjustment of the welding current.

The present invention contains the improvement step over the prior art of circumferential/cylindrical/annular switches where the active switching surface is projected onto the majority of the outer cylindrical surface of the torch handle 101 for optimal grasp ergonomics as discussed, and the switching contacts on the contact assembly 200 are arrayed in a manner that set series-pairs of switch contacts 202 on diametrically opposing sides of the cylinder, thus requiring force application to the torch handle 101 on diametrically opposing regions, i.e. 180 degrees apart, of the cylindrical torch handle 101 outer grip 118, about the longitudinal axis of the torch handle 102 to connect both contacts 226,228 of the series-pair 201 and close the control circuit. Thus, the invention reduces the risk of inadvertent actuation of the switching device 102. The opposing force application may occur at several axial positions and inclinations along the torch handle 101 to give the operator freedom of hand posture positioning. The closure force is selected, by material selection or layer thickness adjustment, to be suitable for firm but not excessive grasping force in the range 3-30 kg (approximately 7-70 lbs) typical of an adult human grasp range, thereby allowing freedom of manipulation of the switching device 102 and only activating the switching device 102 under an intentionally firm grasp by the operator. It is envisaged that the switching force may be calibrated to several levels for the operator to select, e.g. soft/medium/hard.

The improvement steps over the prior art are:
A. Torch handle 101 with integrated cylindrical switching device 102 allows the operator to maintain a full-palmar prehension during switch actuation and during welding, i.e. the operator does not need to alter hand position at all, minimising unintentional motion in torch and reducing risk of inadvertently hitting the tungsten electrode into a workpiece and mutual contamination.
B. Torch handle 101 with integrated cylindrical switching device 102 does not require operator to maintain a digit applying a precision pressure throughout weld, i.e. minimising fatigue, stabilising grasp, maximising weld repeatability and minimising grinding at arc striking/termination areas of the weld joint.
C. Torch handle 101 with integrated cylindrical switching device 102 has all contacts sealed into the switching device 102 with sealed strain relief 128 on the control cable 122, providing maximum ingress and handling protection for field work scenarios.
D. Switch type is inherently safe against inadvertent actuations when laid down or pressed on a single point. i.e. by utilising a switch array with a plurality of diametrically opposing series-pair switch contacts arranged in parallel.
E. Switch type requires no additional control electronics to interface to typical welding power sources.

Advantageously, the invention resolves the limitations of the prior art relating to manual welding torch hand controls. The disclosed invention improves the ergonomics, repeatability and quality of manual welding processes, particularly in the field of the Tungsten Inert Gas (TIG) welding process. It may also find ready adoption in variety of other applications as a grasp activated switching device.

Further, the invention comprises an electric circuit control switch integrated into a TIG welding torch handle, using a cylindrical switch that closes upon application of an intentionally firm grasp, for example under a full-palmar prehension grasp.

In addition, the integrated cylindrical switch enables an ergonomically optimal relaxed full-palmar prehension position to be maintained throughout the weld operation and during arc striking/termination. The invention also does not require the operator to maintain a digit applying a precision force throughout the weld operation.

These advantageous aspects of the invention combine to result in minimising unintentional motion in torch, thereby reducing inadvertent tungsten electrode contact to the workpiece and subsequent mutual contamination. In addition to minimising operator fatigue, stabilising the operators grasp to maximise weld repeatability and minimising grinding at arc striking/termination areas of the weld joint by removing the need for tail-offs and arc termination without adequate shield gas coverage. The switch is completely sealed into the device and in combination with a sealed strain relief on the control cable, provides maximum ingress protection and handling protection for field work scenarios, i.e. dust and moisture. The cylindrical switch of the type disclosed is inherently safe against inadvertent actuations when laid down or pressed on a single point. i.e. utilising an array with a plurality of diametrically opposing switch contact pairs in parallel. This switch type requires no additional control electronics to interface to contemporary welding power sources.

The terms "comprise" and "include", and any variations thereof required for grammatical reasons, are to be considered as interchangeable and accorded the widest possible interpretation.

The invention is not limited to the embodiments hereinbefore described but may be varied in both construction and detail within the scope of the appended claims.

## Claims

1. A switching device (102) for a welding torch (100), comprising an operating switch (102) for mounting on the welding torch handle (101) to form a grasp sensitive handgrip of the welding torch (100), the operating switch (102) being resiliently deformable between closed and open positions under an intentional increase and decrease of a grasping force in use to control operation of the welding torch (100).

2. The switching device (102) as claimed in claim 1, wherein the operating switch (102) comprises at least one switch pair (201) comprising two spaced-apart switches (202) connected in series and operable together in response to the grasping force.

3. The switching device (102) as claimed in claim 2, wherein the switches (202) in each switch pair (201) locate at opposite sides of the welding torch handle (101) when the switching device (102) is mounted on the welding torch handle (101).

4. The switching device (102) as claimed in claim 2 or claim 3, wherein a plurality of longitudinally spaced-apart switch pairs (201) is provided.

5. The switching device (102) as claimed in claim 4, wherein adjacent switch pairs (201) are laterally offset from each other.

6. The switching device (102) as claimed in any one of the preceding claims, wherein the switches (202) are mounted on a resiliently deformable tubular support (118).

7. The switching device (102) as claimed in claim 6, wherein the tubular support (118) is cylindrical.

8. The switching device (102) as claimed in any one of the preceding claims, wherein the operating switch is a cylindrical switch (102) comprising a contact assembly (200) having a cylindrical layer of substrate insulator (220) with conductors (204,206,208) arranged in a circuit and a complementary cylindrical layer of superstrate insulator (224) with conductors (226,228) arranged in an array, separated by a cylindrical layer of spacer insulator (222) with through-hole cutouts (223) in the spacer insulator (222), the contact assembly (200) being mounted between an inner cylindrical core (108) and an outer flexible cylindrical handgrip (118).

9. The switching device (102) as claimed in claim 8, wherein the substrate insulator (220) and conductors (204,206,208) are mounted on an inner face of the spacer insulator (222) and the superstrate insulator (224) is mounted on an outer face of the spacer insulator (222).

10. The switching device (102) as claimed in claim 8 or claim 9, wherein the superstrate insulator (224) has a plurality of spaced-apart conducting contacts (226,228) which project radially inwardly on an inner face of the superstrate insulator (224), and the substrate insulator (220) has a plurality of spaced-apart conducting contacts (204,206,208) projecting radially outwardly from an outer face of the substrate insulator (220) to form a circuit, an array of through-hole cutouts (223) in the spacer insulator (222) to allow engagement between associated contacts on the superstrate insulator (224) and on the substrate insulator (220) when resiliently deformed together to close the cylindrical switch (102).

11. The switching device (102) as claimed in claim 10, wherein the substrate insulator (220) or superstrate insulator (224) has axially spaced-apart parallel circumferential conductor paths.

12. The switching device (102) as claimed in claim 10 or claim 11, wherein the substrate insulator (220) or superstrate insulator (224) has conductor paths forming an array of series-pair switch contacts (201) in parallel.

13. The switching device (102) as claimed in any one of claims 8 to 12, wherein the insulators (220, 222, 224) each comprise a resilient polymer.

14. The switching device (102) as claimed in claim 13, wherein the resilient polymer comprises polyester or polyimide.

15. A welding torch (100) incorporating the switching device (102) as claimed in any one of the preceding claims.
